# FASCICULE DE BREVET EUROPEEN

(11) **EP 2 177 803 B1**
(45) Date de publication et mention de la délivrance du brevet: **10.07.2019**
(21) Numéro de dépôt: 09290774.0
(22) Date de dépôt: 12.10.2009
(51) Int. Cl.: F16L 9/12

(54) **Canalisation pour tuyauterie de carburant de véhicule aérien ou spatial, son procédé de fabrication et aile d'avion l'incorporant**
Treibstoffleitung für Flug-oder Raumfahrzeuge, ihre Herstellungsmethode und Flügel mit entsprechender Leitung
Carburant line for space or aircrafts, its production method and a space or aircraft wing having a said line

(30) Priorité: 17.10.2008 FR 0805783
(43) Date de publication de la demande: 21.04.2010
(73) Titulaire: Hutchinson, 75008 Paris (FR)
(72) Inventeur: Ciolczyk, Jean-Pierre, 45200 Montargis (FR); Bouleti, Julien, 45100 Orleans (FR); Dolez, Marc, 06950 Falicon (FR)
(74) Mandataire: Gevers & Orès

(56) Documents cités:
- EP-A- 1 264 717
- EP-A- 1 589 270
- GB-A- 1 231 091
- JP-A- 63 249 631
- US-A- 5 261 991
- US-A1- 2003 000 592

## Description

La présente invention concerne une canalisation pour tuyauterie de carburant de véhicule aérien ou spatial, en particulier destinée à être montée dans chacune des ailes d'un avion, une aile d'avion incorporant cette canalisation et un procédé de fabrication de cette dernière.

Les tuyauteries ou lignes de carburant des avions actuels sont usuellement réalisées en aluminium, à l'instar des ailes dans lesquelles elles sont logées. On commence néanmoins depuis quelques années à concevoir des ailes et des tuyauteries de carburant en matériaux composites, afin d'alléger dans la mesure du possible ces tuyauteries et la voilure l'incorporant. On peut par exemple citer le document WO-A1-2006/136597 pour un exemple de canalisation composite, comportant deux conduits interne et externes coaxiaux séparés par des entretoises et qui sont au moins en partie réalisés en un matériau thermodurcissable composite, tel qu'une résine époxy renforcée par des fibres de carbone. Document GB 1231091 montre également une canalisation selon l'état de la technique.

Outre ce gain de masse, on a cherché à contrôler la conductivité électrique de l'ensemble de la voilure en cas de foudroiement, tout en éliminant les charges électrostatiques à l'intérieur de ces tuyauteries. En effet, il faut veiller lors d'un foudroiement à ce que, d'une part, la foudre s'écoule principalement par les structures des ailes et, d'autre part, à ce que l'accumulation de charges électrostatiques à l'intérieur de la tuyauterie parcourue par le carburant soit strictement limitée pour éviter tout risque d'explosion par inflammation du carburant.

Les recherches menées sur ces tuyauteries composites ont ainsi conduit à concevoir des tuyaux à multicouches thermodurcissables composites, présentant deux couches ou « peaux » interne et externe qui sont chacune typiquement à base d'une résine époxy renforcée par des fibres de carbone et qui sont séparées par une couche intermédiaire ou « âme » typiquement à base de cette même résine époxy renforcée par des fibres de verre. La conductibilité des couches interne et externe qui est conférée par les fibres de carbone électriquement conductrices est prévue pour permettre l'évacuation par la couche interne des charges électrostatiques et le détournement par la couche externe de la foudre vis-à-vis de l'intérieur du tuyau. Quant à la couche intermédiaire, elle est essentiellement prévue pour isoler électriquement la couche externe de la couche interne par les fibres de verre qu'elle incorpore, tout en conférant via ces dernières un module d'inertie élevé au tuyau (i.e. une résistance satisfaisante aux efforts de flexion).

Ces canalisations à multicouches thermodurcissables composites, si elles permettent de contrôler d'une manière satisfaisante la conductivité électrique, en termes d'évacuation des charges électrostatiques internes et de protection du carburant vis-à-vis de la foudre, présentent néanmoins l'inconvénient majeur d'être nettement plus lourdes que les canalisations usuelles en aluminium du fait de l'utilisation de fibres de verre dans la couche intermédiaire isolante. Un autre inconvénient de ces canalisations composites connues réside dans leur coût de fabrication relativement élevé, qui est dû aux opérations successives de dépôt et de consolidation des trois couches thermodurcissables.

Il est par ailleurs connu d'utiliser pour ces tuyauteries de carburant des tuyaux monocouche en résine époxy, qui comprend du graphite à titre de charge électriquement conductrice et qui est renforcée par des fibres de verre à titre de charge renforçante.

Un but de la présente invention est de proposer une canalisation pour tuyauterie de carburant de véhicule aérien ou spatial, en particulier destinée à être montée dans chacune des ailes d'un avion, qui remédie à ces inconvénients, la canalisation comportant au moins un tuyau multicouches comprenant deux couches respectivement interne et externe réalisées chacune en une matière plastique composite qui est étanche et chimiquement résistante au carburant et qui est renforcée par des moyens de renfort électriquement conducteurs, ces couches étant séparées entre elles par une couche intermédiaire notamment apte à rigidifier le tuyau en flexion et/ou à l'isoler électriquement.

A cet effet, chacune des couches interne et externe comprend au moins un enroulement à spires jointives, autour de l'axe de symétrie du tuyau, d'un élément continu réalisé en un matériau thermoplastique composite à matrice thermoplastique incorporant ces moyens de renfort, de sorte que ce tuyau permette d'évacuer les charges électrostatiques par sa couche interne et de détourner les décharges électriques dues à la foudre par sa couche externe tout en présentant un module d'inertie élevé et une masse réduite.

Par l'expression « au moins un enroulement à spires jointives », on entend dans la présente description un pli ou plusieurs plis cylindrique(s) radialement superposés, le ou chaque pli inclus dans la couche interne et dans la couche externe pouvant être formé d'au moins un élément thermoplastique composite continu (i.e. un ou plusieurs éléments chacun d'un seul tenant et de longueur importante), qui est enroulé sur une surface cylindrique sans espace axial entre les spires jointives formées - lesquelles peuvent se recouvrir deux à deux le long du tuyau - pour assurer l'étanchéité des couches au carburant.

On notera que la structure à couches thermoplastiques interne et externe formées d'enroulements, qui caractérise le tuyau composite selon l'invention, présente le double avantage de présenter une masse réduite et d'être réalisable de manière simple et à un coût réduit, en comparaison des structures thermodurcissables connues incorporant des fibres de verre, tout en permettant de contrôler d'une manière satisfaisante la conductibilité de l'ensemble de la structure via les moyens de renfort conducteurs utilisés dans ces couches interne et externe.

On notera également qu'un tuyau selon l'invention peut présenter une géométrie tant droite que coudée ou cintrée (i.e. avec des axes de symétrie éventuellement bidimensionnels, voire tridimensionnels), pourvu qu'il soit à symétrie de révolution (i.e. cylindrique par exemple de section circulaire et/ou même conique).

Selon une autre caractéristique de l'invention, ledit ou chaque élément continu de la couche interne et/ou de la couche externe peut être formé d'un ruban enroulé par bobinage. Par « ruban », on entend dans la présente description une bande ou similaire de largeur très réduite en comparaison de sa longueur. L'angle que fait chaque spire d'enroulement avec l'axe de symétrie du tuyau est de préférence sensiblement égal à 54°, ce qui permet d'obtenir un état d'équilibre satisfaisant de chaque élément continu enroulé, résistant au fluage et à la pression auxquels est soumis le tuyau.

Selon une autre caractéristique de l'invention, ledit ou chaque élément continu des couches interne et externe peut comprendre à titre de moyens de renfort électriquement conducteurs des fibres renforçantes, de préférence des fibres de carbone.

Avantageusement, ledit ou chaque élément continu des couches interne et externe peut comprendre à titre de moyens de renfort des fibres de carbone mélangées à d'autres fibres renforçantes électriquement isolantes, qui sont de préférence des fibres de verre ou d'aramide, afin d'ajuster la conductivité électrique de l'ensemble de la structure.

Egalement à titre préférentiel, ledit ou chaque élément continu des couches interne et externe est à base d'au moins un polymère thermoplastique choisi dans le groupe constitué par les polyamides, les polyétherimides (PEI), les polysulfures de phénylène (PPS), les polyétheréthercétones (PEEK), les polyéthercétonecétones (PEKK) et leurs mélanges. On notera que d'autres polymères thermoplastiques sont utilisables, pourvu qu'ils présentent une étanchéité et une résistance chimique au carburant satisfaisantes.

A titre encore plus préférentiel, la matrice thermoplastique dudit ou de chaque élément continu des couches interne et externe est à base d'un polyamide PA11 ou PA12, et lesdits moyens de renfort de ces couches comprennent des fibres de carbone longues.

Avantageusement, ledit ou chaque élément continu des couches interne et externe peut comprendre en outre du graphite à titre de charge électriquement conductrice dispersée dans cette matrice thermoplastique, par exemple en plus d'un mélange de fibres de carbone et de fibres de verre ou d'aramide.

La couche intermédiaire du tuyau comprend au moins un enroulement à spires jointives, autour de la couche interne, d'un élément continu intermédiaire à matrice thermoplastique, qui est de préférence identique à la matrice thermoplastique des couches interne et/ou externe mais qui est dépourvue de tout moyen de renfort. Le ou chaque élément continu intermédiaire peut être alors formé d'un ruban enroulé par bobinage sur la couche interne, et il peut par ailleurs comprendre au moins une charge électriquement conductrice dispersée dans sa matrice thermoplastique, telle que du noir de carbone ou des fibres de carbone courtes.

Selon une variante de l'invention, la couche intermédiaire du tuyau peut être apte à amortir les vibrations se propageant le long de la tuyauterie de carburant, étant alors de préférence à base d'au moins un élastomère de type caoutchouc ou élastomère thermoplastique, ou bien d'au moins un polymère thermoplastique adapté pour procurer cet amortissement.

Dans l'un ou l'autre cas, on notera que cette couche intermédiaire est avantageusement totalement dépourvue de fibres de verre, ce qui permet d'alléger le tuyau multicouches l'incorporant en comparaison des tuyaux composites connus à couche intermédiaire renforcée par des fibres de verre.

A titre optionnel, le tuyau peut comprendre en outre, sous la couche interne, un revêtement interne définissant la surface radialement intérieure du tuyau et/ou, sur la couche externe, une gaine externe définissant la surface radialement extérieure du tuyau, ce revêtement et cette gaine étant de préférence extrudés ou enroulés autour de l'axe de symétrie du tuyau.

On notera que ce revêtement interne et/ou cette gaine peuvent permettre d'améliorer les propriétés physiques et chimiques du tuyau, comme par exemple l'étanchéité, l'aspect de surface ou la résistance à des produits contaminants.

Avantageusement, le tuyau peut être rigidifié sur sa surface radialement extérieure par une pluralité de nervures axiales solidaires de cette surface par exemple par soudage ou collage en y étant régulièrement espacées, de telle sorte que la rigidité en flexion et la tenue du tuyau en pression/ dépression soient augmentées. Chaque nervure est de préférence formée d'un jonc thermoplastique de section sensiblement circulaire qui est optionnellement renforcé par des fibres continues ou discontinues.

On notera que le nombre de ces nervures peut être choisi en fonction des propriétés mécaniques et antivibratoires recherchées.

Selon une autre caractéristique de l'invention, ledit tuyau peut être pourvu d'embouts de raccordement à ses extrémités respectives qui sont solidaires du tuyau et qui sont avantageusement réalisés en un matériau thermoplastique, composite thermoplastique incluant éventuellement des inserts métalliques, ou bien en un matériau métallique.

De préférence ces embouts sont réalisés en un matériau thermoplastique ou bien en un matériau composite thermoplastique identique ou différent de celui des couches interne et externe du tuyau, le matériau de ces embouts comprenant optionnellement des fibres de renfort et/ou des charges électriquement conductrices. Dans ce cas préférentiel, chaque embout est avantageusement rapporté sur le tuyau via un soudage par rotation ou via un collage, et est en contact avec les surfaces radialement intérieure et extérieure du tuyau de sorte à assurer une équi-potentialité électrique entre ces surfaces.

En variante chaque embout peut être formé d'un seul tenant avec le tuyau via un surmoulage, en étant monté au contact de la surface radialement extérieure du tuyau.

Une aile d'avion selon l'invention, qui contient une tuyauterie de carburant comportant des canalisations raccordées à un réservoir de carburant de l'avion, est caractérisée en ce que l'une au moins de ces canalisations est telle que définie ci-dessus.

Un procédé selon l'invention de fabrication d'un tuyau multicouches pour une canalisation telle que définie ci-dessus comprend essentiellement les étapes successives suivantes :
a) enroulement par bobinage à spires jointives sur un mandrin d'au moins un élément continu interne, tel qu'un ruban, réalisé en un matériau thermoplastique composite à matrice thermoplastique par exemple en polyamide et incorporant des moyens de renfort électriquement conducteurs, tels que des fibres de carbone éventuellement mélangées à d'autres fibres renforçantes électriquement isolantes comme des fibres de verre ou d'aramide, puis consolidation en continu du ou de chaque élément interne ainsi enroulé pour l'obtention d'une couche interne du tuyau,
b) formation d'une couche intermédiaire du tuyau :
   (i) soit via un enroulement par bobinage à spires jointives sur la couche interne d'au moins un élément continu intermédiaire, tel qu'un ruban, réalisé en un matériau thermoplastique non renforcé à matrice thermoplastique de préférence identique à celle dudit élément continu interne, puis consolidation en continu du ou de chaque élément intermédiaire ainsi enroulé,
   (ii) soit via un recouvrement de la couche interne par cette couche intermédiaire qui est de préférence à base d'au moins un élastomère de type caoutchouc ou élastomère thermoplastique ou d'au moins un polymère thermoplastique, et qui est apte à amortir les vibrations se propageant le long de la tuyauterie de carburant, puis
c) enroulement par bobinage à spires jointives sur cette couche intermédiaire d'au moins un élément continu externe, tel qu'un ruban, réalisé en un matériau thermoplastique composite qui est à matrice thermoplastique incorporant des moyens de renfort électriquement conducteurs, tels que des fibres de carbone, et qui est de préférence analogue à celui dudit élément continu interne, puis consolidation en continu du ou de chaque élément intermédiaire ainsi enroulé pour l'obtention d'une couche externe du tuyau.

Comme indiqué précédemment, on réalise de préférence les enroulements précités en veillant à ce que l'angle que fait chaque spire d'enroulement de la couche interne, intermédiaire et/ou externe avec l'axe de symétrie du tuyau soit sensiblement égal à 54°.

Ce procédé peut avantageusement comprendre une étape ultérieure de solidarisation d'embouts de raccordement avec les extrémités respectives du tuyau, ces embouts étant réalisés :
- soit séparément en un matériau thermoplastique ou composite thermoplastique incluant éventuellement des inserts métalliques ou bien en un matériau métallique, cette solidarisation étant de préférence mise en oeuvre via un soudage par rotation ou un collage des embouts au contact des surfaces radialement intérieure et extérieure du tuyau, de sorte à assurer une équi-potentialité électrique entre ces surfaces,
- soit d'un seul tenant avec le tuyau par surmoulage d'un matériau thermoplastique ou composite thermoplastique, chaque embout venant alors au contact de la surface radialement extérieure du tuyau.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique en section axiale d'un tuyau pour une canalisation selon l'invention,
la figure 2 est une vue schématique de détail en demi-section axiale du tuyau de la figure 1, illustrant la structure multicouches de ce tuyau selon un exemple de réalisation de l'invention,
les figures 3 et 4 sont deux vues schématiques en section radiale de tuyaux selon deux variantes de réalisation de l'invention, ce tuyau étant respectivement pourvu de quatre et de trois nervures de rigidification,
la figure 5 est une vue schématique en section axiale d'un tuyau selon l'invention équipé d'embouts de raccordement à ses extrémités respectives, et
la figure 6 est une photographie illustrant un mode de réalisation du tuyau de la figure 4 équipé de ces embouts.

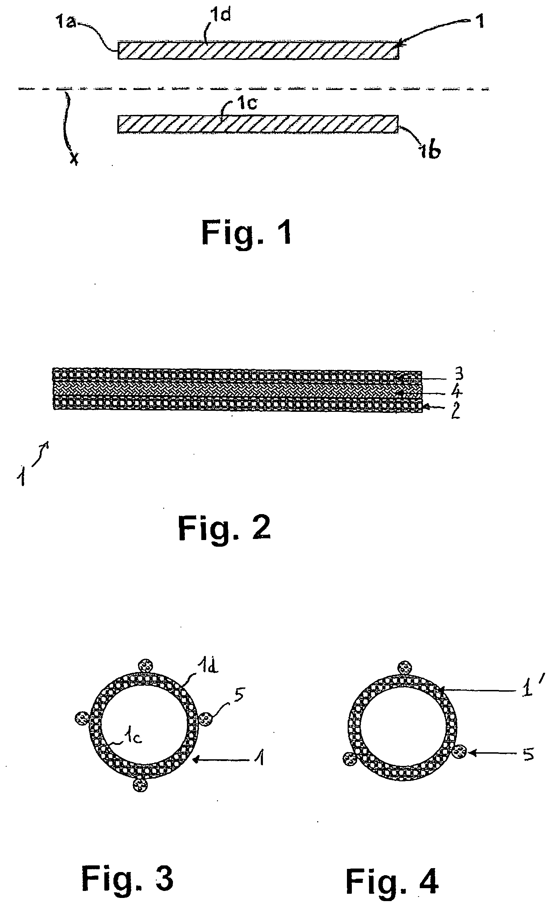

Le tuyau multicouches 1 illustré aux figures 1 à 6 est en particulier destiné à équiper une canalisation pour tuyauterie de carburant logée dans une aile d'avion. Ce tuyau 1 selon l'invention comprend essentiellement :
- deux couches radialement interne 2 et externe 3 réalisées chacune en un matériau plastique composite qui est étanche et chimiquement résistante au carburant de l'avion et qui est renforcé par des fibres de renfort électriquement conductrices, de préférence des fibres longues de carbone par exemple coupées à des fibres électriquement isolantes comme des fibres de verre ou d'aramide, et
- une couche intermédiaire 4 séparant ces couches 2 et 3 entre elles, qui est apte à rigidifier le tuyau en flexion, à l'isoler électriquement et/ou à amortir les vibrations se propageant le long de la tuyauterie de carburant.

Selon l'invention, la couche interne 2 et la couche externe 3 comprennent chacune au moins un enroulement à spires jointives par bobinage d'un ruban ou similaire autour de l'axe de symétrie X du tuyau 1, et ces couches 2 et 3 sont respectivement réalisées en des matériaux composites spécifiquement thermoplastiques qui sont de préférence choisis analogues. Le matériau de la couche 2 et de la couche 3 comprend une matrice thermoplastique par exemple à base de polyamide PA11 ou PA12 à laquelle sont intégrées les fibres de renfort précitées. Comme indiqué précédemment, on notera que sont également utilisables dans la matrice thermoplastique de l'une et l'autre de ces couches 2 et 3 tous autres polymères thermoplastiques présentant notamment des propriétés d'étanchéité et de résistance chimique satisfaisantes vis-à-vis du carburant choisi.

Quant à la couche intermédiaire 4, elle peut également comprendre au moins un enroulement à spires jointives, autour de la couche interne 2, d'un ruban à matrice thermoplastique bobiné sur la couche interne 2. La matrice thermoplastique de la couche 4 est de préférence identique à celle de la couche 2 (e.g. à base de PA11 ou de PA12) mais elle est dépourvue de tout moyen de renfort.

En variante, cette couche intermédiaire 4 peut être apte à amortir les vibrations se propageant le long de la canalisation, étant alors à base d'un élastomère de type caoutchouc ou élastomère thermoplastique, ou bien d'un polymère thermoplastique adapté pour procurer cet amortissement.

Optionnellement dans l'un ou l'autre cas, la couche intermédiaire 4 peut comprendre une charge électriquement conductrice dispersée dans sa matrice thermoplastique, telle que du noir de carbone ou des fibres de carbone courtes, à titre non limitatif.

A titre indicatif, l'épaisseur de chaque couche 2, 3, 4 du tuyau 1 est par exemple comprise entre 0,4 mm et 0,6 mm.

On notera qu'un revêtement intérieur et/ou une gaine extérieure pour le tuyau 1 pourrai(en)t être déposés radialement sous la couche 2 et/ou radialement sur la couche 3, respectivement, par exemple pour améliorer les propriétés physiques et chimiques du tuyau 1.

Ce tuyau 1 est avantageusement fabriqué comme suit.

On commence par enrouler par bobinage sur un mandrin le ou chaque ruban thermoplastique renforcé et électriquement conducteur qui est destiné à former la couche interne 2, avantageusement selon un angle de 54° avec l'axe X, puis on le consolide en continu.

On enroule ensuite sur cette couche interne 2, également par bobinage et avantageusement selon un angle de 54° avec l'axe X, le ou chaque ruban thermoplastique non renforcé (de préférence à matrice thermoplastique identique à celle du ruban de la couche 2), puis on le consolide en continu pour l'obtention de la couche intermédiaire 4. Dans la variante précitée, on recouvre la couche 2 par le matériau élastomère ou thermoplastique précité.

Puis on enroule sur cette couche 4, toujours par bobinage à spires jointives et avantageusement selon le même angle de 54°, le ou chaque ruban thermoplastique renforcé et électriquement conducteur de préférence réalisé en un matériau analogue à celui de la couche interne 2, puis on consolide en continu le ou chaque ruban ainsi enroulé pour l'obtention de la couche externe 3.

Comme illustré aux figures 3 et 4, le tuyau 1, 1' peut être rigidifié sur sa surface radialement extérieure par des nervures axiales 5 solidaires de cette surface par exemple par soudage ou collage en y étant régulièrement espacées, en vue d'augmenter encore le module d'inertie et la tenue du tuyau 1, 1' en pression/ dépression. Chaque nervure 5 est par exemple formée d'un jonc thermoplastique de section circulaire, pouvant être optionnellement renforcé par des fibres continues ou discontinues. On notera que le nombre de nervures 5, de préférence au moins égal à trois, peut varier en fonction des propriétés mécaniques et antivibratoires recherchées.

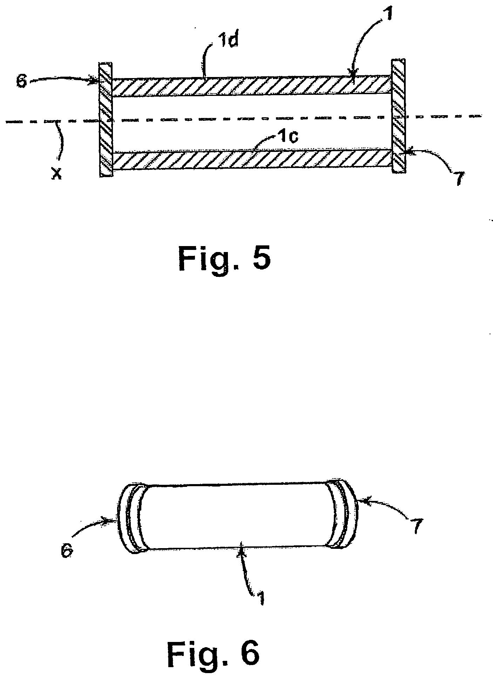

Comme illustré aux figures 5 et 6, le tuyau 1 peut être pourvu d'embouts de raccordement 6 et 7 à ses extrémités respectives 1a et 1b qui en sont solidaires et qui sont de préférence réalisés en un matériau thermoplastique ou thermoplastique composite identique ou différent de celui des couches 2 et 3 du tuyau 1. Dans ce cas préférentiel, chaque embout 6, 7 est avantageusement rapporté sur le tuyau 1 via un soudage par rotation (i.e. par friction) et est alors en contact avec les surfaces radialement intérieure 1c et extérieure 1d du tuyau 1 de sorte à assurer leur équi-potentialité électrique.

En variante, chaque embout 6, 7 de type thermoplastique ou thermoplastique composite est formé d'un seul tenant avec le tuyau 1 via un surmoulage dans un moule à injection, en étant alors monté au contact de sa surface radialement extérieure 1d.

En résumé, ce tuyau 1 permet notamment d'évacuer les charges électrostatiques par sa couche interne 2 et de détourner les décharges électriques par sa couche externe 3 tout en présentant un module d'inertie élevé. De plus, il est relativement léger (notamment du fait de l'absence de fibres de verre) tout en étant réalisable par un procédé relativement simple et donc peu coûteux à mettre en oeuvre, en comparaison des tuyaux à couches thermodurcissables composites de l'art antérieur.

## Revendications

1. Canalisation pour tuyauterie de carburant de véhicule aérien ou spatial, en particulier destinée à être montée dans chacune des ailes d'un avion, la canalisation comportant au moins un tuyau multicouches (1, 1') comprenant deux couches respectivement interne (2) et externe (3) réalisées chacune en une matière plastique composite qui est étanche et chimiquement résistante au carburant et qui est renforcée par des moyens de renfort électriquement conducteurs, ces couches étant séparées entre elles par une couche intermédiaire (4) notamment apte à 'isoler électriquement le tuyau, chacune des couches interne et externe comprend au moins un enroulement à spires jointives, autour de l'axe de symétrie (X) du tuyau, d'un élément continu réalisé en un matériau thermoplastique composite à matrice thermoplastique incorporant ces moyens de renfort, **caractérisée en ce que** la couche intermédiaire (4) dudit tuyau (5) comprend au moins un enroulement à spires jointives, autour de la couche interne (2), d'un élément continu intermédiaire à matrice thermoplastique et dépourvue de tout moyen de renfort, de sorte que ce tuyau permette d'évacuer les charges électrostatiques par sa couche interne et de détourner les décharges électriques par sa couche externe tout en présentant un module d'inertie élevé et une masse réduite.

2. Canalisation selon la revendication 1, **caractérisée en ce que** ledit ou chaque élément continu de la couche interne (2) et/ou de la couche externe (3) est formé d'un ruban enroulé par bobinage, l'angle que fait chaque spire d'enroulement avec ledit axe de symétrie (X) étant de préférence sensiblement égal à 54°.

3. Canalisation selon la revendication 1 ou 2, **caractérisée en ce que** ledit ou chaque élément continu des couches interne (2) et externe (3) comprend à titre de moyens de renfort des fibres renforçantes électriquement conductrices, de préférence des fibres de carbone, et **en ce que** de préférence ledit ou chaque élément continu des couches interne et externe comprend à titre de moyens de renfort des fibres de carbone mélangées à d'autres fibres renforçantes électriquement isolantes, qui sont de préférence des fibres de verre ou d'aramide.

4. Canalisation selon une des revendications précédentes, **caractérisée en ce que** ledit ou chaque élément continu des couches interne (2) et externe (3) est à base d'au moins un polymère thermoplastique choisi dans le groupe constitué par les polyamides, les polyétherimides (PEI), les polysulfures de phénylène (PPS), les polyétheréthercétones (PEEK), les polyéthercétonecétones (PEKK) et leurs mélanges, et **en ce que** de préférence
- la matrice thermoplastique dudit ou de chaque élément continu des couches interne et externe est à base d'un polyamide PA11 ou PA12, et
- lesdits moyens de renfort de ces couches comprennent des fibres de carbone longues.

5. Canalisation selon une des revendications précédentes, **caractérisée en ce que** ledit ou chaque élément continu des couches interne (2) et externe (3) comprend en outre du graphite à titre de charge électriquement conductrice, par exemple en plus d'un mélange de fibres de carbone et de fibres de verre ou d'aramide.

6. Canalisation selon une des revendications précédentes, **caractérisée en ce que** la matrice thermoplastique de l'élément continu intermédiaire est identique à la matrice thermoplastique des couches interne et/ou externe (3), et **en ce que** de préférence ledit ou chaque élément continu intermédiaire est formé d'un ruban enroulé par bobinage sur la couche interne (2).

7. Canalisation selon la revendication 6, **caractérisée en ce que** ledit ou chaque élément continu intermédiaire comprend au moins une charge électriquement conductrice dispersée dans sa matrice thermoplastique, telle que du noir de carbone ou des fibres de carbone courtes.

8. Canalisation selon une des revendications 1 à 5, **caractérisée en ce que** la couche intermédiaire (4) dudit tuyau (1, 1') est apte à amortir les vibrations se propageant le long de la tuyauterie de carburant, étant de préférence à base d'au moins un élastomère de type caoutchouc ou élastomère thermoplastique, ou bien d'au moins un polymère thermoplastique adapté pour procurer cet amortissement.

9. Canalisation selon une des revendications précédentes, **caractérisée en ce que** ledit tuyau (1, 1') comprend en outre, sous la couche interne (2), un revêtement interne définissant la surface radialement intérieure du tuyau et/ou, sur la couche externe (3), une gaine externe définissant la surface radialement extérieure du tuyau, ce revêtement et cette gaine étant de préférence extrudés ou enroulés autour de l'axe de symétrie (X) du tuyau.

10. Canalisation selon une des revendications précédentes, **caractérisée en ce que** ledit tuyau (1, 1') est rigidifié sur sa surface radialement extérieure par une pluralité de nervures axiales (5) solidaires de cette surface par exemple par soudage ou collage en y étant régulièrement espacées, de telle sorte que la rigidité en flexion et la tenue du tuyau en pression/ dépression soient augmentées, et **en ce que** de préférence chacune desdites nervures (5) est formé d'un jonc thermoplastique de section sensiblement circulaire qui est optionnellement renforcé par des fibres continues ou discontinues.

11. Canalisation selon une des revendications précédentes, **caractérisée en ce que** ledit tuyau (1, 1') est pourvu d'embouts de raccordement (6 et 7) à ses extrémités respectives (1a et 1b) qui sont solidaires du tuyau et qui sont réalisés en un matériau thermoplastique, composite thermoplastique incluant éventuellement des inserts métalliques, ou bien en un matériau métallique.

12. Canalisation selon la revendication 11, **caractérisée en ce que** lesdits embouts (6 et 7) sont réalisés en un matériau thermoplastique ou bien en un matériau composite thermoplastique identique ou différent de celui des couches interne (2) et externe (3) du tuyau (1, 1'), le matériau de ces embouts comprenant optionnellement des fibres de renfort et/ou des charges électriquement conductrices.

13. Canalisation selon la revendication 12, **caractérisée en ce que** chacun desdits embouts (6, 7) est rapporté sur ledit tuyau (1, 1') via un soudage par rotation ou via un collage, et est en contact avec les surfaces radialement intérieure (1c) et extérieure (1d) du tuyau de sorte à assurer une équi-potentialité électrique entre ces surfaces.

14. Canalisation selon la revendication 12, **caractérisée en ce que** chacun desdits embouts (6, 7) est formé d'un seul tenant avec ledit tuyau (1, 1') via un surmoulage et est monté au contact de la surface radialement extérieure (1d) du tuyau.

15. Aile d'avion contenant une tuyauterie de carburant comportant des canalisations raccordées à un réservoir de carburant de l'avion, **caractérisée en ce que** l'une au moins de ces canalisations est telle que définie à l'une des revendications précédentes.

16. Procédé de fabrication d'un tuyau multicouches (1, 1') d'une canalisation selon une des revendications 1 à 14, **caractérisé en ce qu'** il comprend essentiellement les étapes successives suivantes :
a) enroulement par bobinage à spires jointives sur un mandrin d'au moins un élément continu interne, tel qu'un ruban, réalisé en un matériau thermoplastique composite à matrice thermoplastique par exemple en polyamide et incorporant des moyens de renfort électriquement conducteurs, tels que des fibres de carbone, puis consolidation en continu du ou de chaque élément interne ainsi enroulé pour l'obtention d'une couche interne (2) du tuyau,
b) formation d'une couche intermédiaire (4) du tuyau via un enroulement par bobinage à spires jointives sur la couche interne d'au moins un élément continu intermédiaire, tel qu'un ruban, réalisé en un matériau thermoplastique non renforcé à matrice thermoplastique de préférence identique à celle dudit élément continu interne, puis consolidation en continu du ou de chaque élément intermédiaire ainsi enroulé, puis
c) enroulement par bobinage à spires jointives sur cette couche intermédiaire d'au moins un élément continu externe, tel qu'un ruban, réalisé en un matériau thermoplastique composite qui est à matrice thermoplastique incorporant des moyens de renfort électriquement conducteurs, tels que des fibres de carbone, et qui est de préférence analogue à celui dudit élément continu interne, puis consolidation en continu du ou de chaque élément intermédiaire ainsi enroulé pour l'obtention d'une couche externe (3) du tuyau.

17. Procédé de fabrication selon la revendication 16, **caractérisé en ce que** l'on réalise ces enroulements de manière que l'angle que fait chaque spire d'enroulement de la couche interne (2), intermédiaire (4) et/ou externe (3) avec ledit axe de symétrie (X) du tuyau (1, 1') soit sensiblement égal à 54°.

18. Procédé de fabrication selon la revendication 16 ou 17, **caractérisé en ce qu'** il comprend une étape ultérieure de solidarisation d'embouts de raccordement (6 et 7) avec les extrémités respectives (1a et 1 b) du tuyau (1, 1'), ces embouts étant réalisés :
- soit séparément en un matériau thermoplastique ou composite thermoplastique incluant éventuellement des inserts métalliques ou bien en un matériau métallique, cette solidarisation étant de préférence mise en oeuvre via un soudage par rotation ou un collage des embouts au contact des surfaces radialement intérieure (1c) et extérieure (1d) du tuyau, de sorte à assurer une équi-potentialité électrique entre ces surfaces,
- soit d'un seul tenant avec le tuyau par surmoulage d'un matériau thermoplastique ou composite thermoplastique, chaque embout venant alors au contact de la surface radialement extérieure (1d) du tuyau.

## Patentansprüche

1. Leitungssystem für eine Treibstoffrohrleitung eines Luft- oder Raumfahrzeugs, die insbesondere dazu bestimmt ist, in jeden der Flügel eines Flugzeugs montiert zu werden, wobei das Leitungssystem mindestens ein Mehrschichtenrohr (1, 1') umfasst, das zwei Schichten, jeweils eine interne (2) und eine externe (3), umfasst, die jeweils aus einem Verbundkunststoff hergestellt sind, der dicht ist und dem Treibstoff chemisch standhält, und das durch elektrisch leitende Verstärkungsmittel verstärkt ist, wobei diese Schichten voneinander durch eine Zwischenschicht (4) getrennt sind, die insbesondere geeignet ist, das Rohr elektrisch zu isolieren, wobei jede der internen und externen Schicht mindestens eine Wicklung mit aneinanderliegenden Windungen, um die Symmetrieachse (X) des Rohrs, eines kontinuierlichen Elements umfasst, das aus einem Verbund-Thermoplastmaterial mit Thermoplastmatrix hergestellt ist, das diese Verstärkungsmittel einschließt, **dadurch gekennzeichnet, dass** die Zwischenschicht (4) des Rohrs (5) mindestens eine Wicklung mit aneinanderliegenden Windungen um die interne Schicht (2) eines kontinuierlichen Zwischenelements aus Thermoplastmatrix und ohne jedes Verstärkungsmittel derart umfasst, dass es dieses Rohr erlaubt, die elektrostatischen Ladungen durch ihre interne Schicht abzuleiten und die elektrischen Entladungen durch ihre externe Schicht umzulenken, während es gleichzeitig ein hohes Trägheitsmodul und eine reduzierte Masse aufweist.

2. Leitungssystem nach Anspruch 1, **dadurch gekennzeichnet, dass** das oder jedes kontinuierliche Element der internen Schicht (2) und/oder der externen Schicht (3) aus einem Band gebildet ist, das durch Aufrollen gewickelt ist, wobei der Winkel, den jede Wicklungswindung mit der Symmetrieachse (X) bildet, bevorzugt im Wesentlichen gleich 54° ist.

3. Leitungssystem nach Anspruch 1 oder 2, **dadurch gekennzeichnet, dass** das oder jedes kontinuierliche Element der internen (2) und externen (3) Schicht als Verstärkungsmittel verstärkende elektrisch leitende Fasern umfasst, bevorzugt Carbonfasern, und dass bevorzugt das oder jedes kontinuierliche Element der internen und externen Schicht als Verstärkungsmittel Carbonfasern umfasst, die mit anderen verstärkenden elektrisch isolierenden Fasern, die bevorzugt Glas- oder Aramidfasern sind, vermischt sind.

4. Leitungssystem nach einem der vorstehenden Ansprüche, **dadurch gekennzeichnet, dass** das oder jedes kontinuierliche Element der internen (2) und externen (3) Schicht auf mindestens einem Thermoplastpolymer basiert, das aus der Gruppe ausgewählt ist, die aus Polyamiden, Polyetherimiden (PEI), Phenylenpolysulfiden (PPS), Polyetheretherketonen (PEEK), Polyetherketonketonen (PEKK) und ihren Gemischen besteht, und dass bevorzugt:
- die Thermoplastmatrix des oder jedes kontinuierlichen Elements der internen und externen Schicht auf Polyamid PA11 oder PA12 basiert, und
- die Verstärkungsmittel dieser Schichten lange Carbonfasern umfassen.

5. Leitungssystem nach einem der vorstehenden Ansprüche, **dadurch gekennzeichnet, dass** das oder jedes kontinuierliche Element der internen (2) und externen (3) Schicht weiter Graphit als elektrisch leitende Füllung umfasst, zum Beispiel zusätzlich zu einem Gemisch aus Carbonfasern und Glas- oder Aramidfasern.

6. Leitungssystem nach einem der vorstehenden Ansprüche, **dadurch gekennzeichnet, dass** die Thermoplastmatrix des kontinuierlichen Zwischenelements mit der Thermoplastmatrix der internen und/oder externen (3) Schicht identisch ist, und dass bevorzugt das oder jedes kontinuierliche Zwischenelement aus einem Band gebildet ist, das durch Aufrollen auf der internen Schicht (2) gewickelt ist.

7. Leitungssystem nach Anspruch 6, **dadurch gekennzeichnet, dass** das oder jedes kontinuierliche Zwischenelement mindestens eine elektrisch leitende Füllung umfasst, die in seiner Thermoplastmatrix verstreut ist, wie zum Beispiel Rußschwarz oder kurze Carbonfasern.

8. Leitungssystem nach einem der Ansprüche 1 bis 5, **dadurch gekennzeichnet, dass** die Zwischenschicht (4) des Rohrs (1, 1') geeignet ist, um Schwingungen zu dämpfen, die sich entlang der Treibstoffrohrleitung ausbreiten, indem sie bevorzugt auf mindestens einem Elastomer vom Typ Kautschuk oder Thermoplastelastomer basiert, oder auf mindestens einem Thermoplastpolymer, das angepasst ist, um diese Dämpfung bereitzustellen.

9. Leitungssystem nach einem der vorstehenden Ansprüche, **dadurch gekennzeichnet, dass** das Rohr (1, 1') weiter unter der internen Schicht (2) eine interne Beschichtung umfasst, die die radial interne Oberfläche des Rohrs definiert, und/oder auf der externen Schicht (3) eine externe Hülle, die die radial äußere Oberfläche des Rohrs definiert, wobei diese Beschichtung und diese Hülle bevorzugt extrudiert oder um die Symmetrieachse (X) des Rohrs gewickelt sind.

10. Leitungssystem nach einem der vorstehenden Ansprüche, **dadurch gekennzeichnet, dass** das Rohr (1, 1') auf seiner radial äußeren Oberfläche durch eine Vielzahl axialer Rippen (5) versteift ist, die fest mit dieser Oberfläche verbunden sind, zum Beispiel durch Schweißen oder Kleben, wobei sie dort regelmäßig beabstandet sind, sodass die Biegesteifigkeit und die Druck- / Unterdruckbeständigkeit des Rohrs erhöht werden, und dass bevorzugt jede der Rippen (5) aus einem Thermoplaststab mit im Wesentlichen kreisförmigem Querschnitt gebildet ist, der optional durch kontinuierliche oder diskontinuierliche Fasern verstärkt ist.

11. Leitungssystem nach einem der vorstehenden Ansprüche, **dadurch gekennzeichnet, dass** das Rohr (1, 1') mit Anschlussansätzen (6 und 7) an ihren jeweiligen Enden (1a und 1b) versehen ist, die fest mit dem Rohr verbunden und aus einem Thermoplastmaterial, Verbund-Thermoplastmaterial, das eventuell metallische Einsätze enthält, oder aus einem metallischen Material hergestellt sind.

12. Leitungssystem nach Anspruch 11, **dadurch gekennzeichnet, dass** die Ansätze (6 und 7) aus einem Thermoplastmaterial oder auch einem Verbund-Thermoplastmaterial, das mit dem der internen (2) und externen (3) Schicht dem Rohr (1, 1') identisch oder davon unterschiedlich ist, hergestellt sind, wobei das Material dieser Ansätze optional Verstärkungsfasern und/oder elektrisch leitende Füllungen umfasst.

13. Leitungssystem nach Anspruch 12, **dadurch gekennzeichnet, dass** jeder der Ansätze (6, 7) auf das Rohr (1, 1') über ein Rotationsschweißen oder über ein Kleben angeschlossen und mit der radial internen (1c) und radial äußeren (1d) Oberfläche des Rohrs derart in Berührung ist, dass zwischen diesen Oberflächen ein elektrischer Äquipotenzialausgleich sichergestellt ist.

14. Leitungssystem nach Anspruch 12, **dadurch gekennzeichnet, dass** jeder der Ansätze (6, 7) aus einem einzigen Stück mit dem Rohr (1, 1') über ein Überformen gebildet und in Berührung mit der radial äußeren Oberfläche (1d) des Rohrs montiert ist.

15. Flugzeugflügel, der eine Treibstoffrohrleitung umfasst, die Leitungssysteme umfasst, die an einen Treibstofftank des Flugzeugs angeschlossen sind, **dadurch gekennzeichnet, dass** mindestens eine dieser Leitungssysteme wie in einem der vorstehenden Ansprüche definiert ist.

16. Herstellungsverfahren eines Mehrschichtenrohrs (1, 1') eines Leitungssystems nach einem der Ansprüche 1 bis 14, **dadurch gekennzeichnet, dass** es im Wesentlichen die folgenden sukzessiven Schritte umfasst:
a) Wickeln durch Aufrollen mit aneinanderliegenden Windungen auf einem Dorn mindestens eines kontinuierlichen internen Elements, wie eines Bands, das aus einem Verbund-Thermoplastmaterial aus Thermoplastmatrix zum Beispiel aus Polyamid hergestellt ist und elektrisch leitende Verstärkungsmittel, wie Carbonfasern, einschließt, dann kontinuierliches Konsolidieren des oder jedes internen Elements, das derart gewickelt ist, dass eine interne Schicht (2) des Rohrs erhalten wird,
b) Bilden einer Zwischenschicht (4) des Rohrs über ein Wickeln durch Aufrollen mit aneinanderliegenden Windungen auf der internen Schicht mindestens eines kontinuierlichen Zwischenelements, wie eines Bands, das aus einem nicht verstärkten Thermoplastmaterial aus Thermoplastmatrix hergestellt ist, das bevorzugt mit der des kontinuierlichen internen Elements identisch ist, dann kontinuierliches Konsolidieren des oder jedes derart gewickelten Zwischenelements,
c) Wickeln durch Aufrollen mit aneinanderliegenden Windungen auf dieser Zwischenschicht mindestens eines kontinuierlichen externen Elements, wie eines Bands, das aus einem aus Thermoplastmatrix Verbund-Thermoplastmaterial hergestellt ist, die elektrisch leitende Verstärkungsmittel, wie Carbonfasern, einschließt, und das bevorzugt zu dem des kontinuierlichen internen Elements analog ist, dann kontinuierliches Konsolidieren des oder jedes derart gewickelten Zwischenelements für das Erhalten einer externen Schicht (3) des Rohrs.

17. Herstellungsverfahren nach Anspruch 16, **dadurch gekennzeichnet, dass** diese Wicklungen derart ausgeführt werden, dass der Winkel, den jede Wicklungswindung der internen Schicht (2), Zwischenschicht (4) und/oder externen Schicht (3) mit der Symmetrieachse (X) des Rohrs (1, 1') bildet, im Wesentlichen gleich 54° ist.

18. Herstellungsverfahren nach Anspruch 16 oder 17, **dadurch gekennzeichnet, dass** es einen späteren Schritt des festen Verbindens von Anschlussansätzen (6 und 7) mit den jeweiligen Enden (1a und 1b) des Rohrs (1, 1') umfasst, wobei diese Ansätze hergestellt werden:
- entweder getrennt aus einem Thermoplastmaterial oder Verbund-Thermoplastmaterial, das eventuell metallische Einsätze enthält, oder auch aus einem metallischen Material, wobei diese feste Verbindung bevorzugt über ein Rotationsschweißen oder ein Kleben der Ansätze in Berührung mit der radial internen (1c) und externen (1d) Oberfläche des Rohrs umgesetzt wird, so dass ein elektrischer Äquipotenzialausgleich zwischen diesen Oberflächen sichergestellt ist,
- oder aus einem einzigen Stück mit dem Rohr durch Überformen eines Thermoplastmaterials oder Verbund-Thermoplastmaterials, wobei jeder Ansatz dann mit der radial äußeren Oberfläche (1d) des Rohrs in Berührung kommt.

## Claims

1. Ducting for a fuel pipeline of an aircraft or spacecraft, in particular designed to be mounted in each of the wings of an aircraft, the ducting comprising at least one multilayer pipe (1, 1') having two respectively inner (2) and outer (3) layers, each made of a composite plastic material that is leakproof and chemically resistant to the fuel and that is reinforced by electrically conductive reinforcing means, these layers being separated from each other by an intermediate layer (4), notably capable to insulate electrically the pipe, each of the inner and outer layers has at least one winding with contiguous turns around the axis of symmetry (X) of the pipe, of a continuous element made of a composite thermoplastic material with a thermoplastic matrix incorporating these reinforcing means, **characterized in that** the intermediate layer (4) of said pipe (5) has at least one winding with contiguous turns around the inner layer (2), of an intermediate continuous element with a thermoplastic matrix, which is lacking any reinforcing means, so that this pipe enables electrostatic charges to be eliminated through its inner layer and electric charges due to lightning to be deflected through its outer layer while having a high modulus of inertia and reduced mass.

2. Ducting according to Claim 1, **characterized in that** said or each continuous element of the inner layer (2) and/or of the outer layer (3) is formed of a strip wound by coiling, the angle that each turn of the winding makes with said axis of symmetry (X) being preferably substantially equal to 54°.

3. Ducting according to Claim 1 or 2, **characterized in that** said or each continuous element of the inner (2) and outer (3) layers has electrically conductive reinforcing fibers as reinforcing means, preferably carbon fibers, and **in that** said or each continuous element of the inner (2) and outer (3) layers has, as reinforcing means, carbon fibers mixed with other electrically insulating reinforcing fibers, which are preferably glass or aramid fibers.

4. Ducting according to one of the preceding claims, **characterized in that** said or each continuous element of the inner (2) and outer (3) layers is based on at least one thermoplastic polymer chosen from the group consisting of polyamides, polyetherimides (PEI), phenylene polysulfides (PPS), polyetheretherketones (PEEK), polyetherketoneketones (PEKK) and mixtures thereof, and **in that** the thermoplastic matrix of said or each continuous element of the inner (2) and outer (3) layers is based on a PA11 or PA12 polyamide, and **in that** said reinforcing means for these layers contain long carbon fibers.

5. Ducting according to one of the preceding claims, **characterized in that** said or each continuous element of the inner (2) and outer (3) layers additionally contains graphite as an electrically conductive filler, for example in addition to a mixture of carbon fibers and glass or aramid fibers.

6. Ducting according to one of the preceding claims, **characterized in that** the intermediate layer (4) of said pipe (5) has at least one winding with contiguous turns around the inner layer (2), of an intermediate continuous element with a thermoplastic matrix, which is preferably identical to the thermoplastic matrix of the inner and/or outer (3) layers but is lacking any reinforcing means, and **in that** said or each intermediate continuous layer is formed of strip wound by coiling on the inner layer (2).

7. Ducting according to Claim 6, **characterized in that** said or each intermediate continuous element contains at least one electrically conductive filler dispersed in its thermoplastic matrix, such as carbon black or short carbon fibers.

8. Ducting according to one of Claims 1 to 5, **characterized in that** the intermediate layer (4) of said pipe (1, 1') is able to dampen vibrations propagated along the fuel pipeline, being preferably based on at least one elastomer of the rubber or thermoplastic elastomer type, or of at least one thermoplastic polymer suitable for producing this dampening.

9. Ducting according to one of the preceding claims, **characterized in that** the pipe (1, 1') additionally includes, under the inner layer (2), an inner coating defining the radially inner surface of the pipe and/or on the outer layer (3), an outer sheath defining the radially outer surface of the pipe, this coating and this sheath being preferably extruded or wound around the axis of symmetry (X) of the pipe.

10. Ducting according to one of the preceding claims, **characterized in that** said pipe (1, 1') is stiffened on its radially outer surface by a plurality of axial ribs (5) fixed to this surface for example by welding or adhesion while being regularly spaced, so that the rigidity on flexing and the strength of the pipe under pressure and under reduced pressure are increased, and **in that** each of said ribs (5) is formed of a thermoplastic bead with a substantially circular cross section that is optionally reinforced by continuous or discontinuous fibers.

11. Ducting according to one of the preceding claims, **characterized in that** said pipe (1, 1') is provided with connecting endpieces (6 and 7) at its respective extremities (1a and 1b) that are fixed to the pipe and that are made of a thermoplastic material, a thermoplastic composite possibly including metallic inserts or of a metallic material.

12. Ducting according to Claim 11, **characterized in that** said endpieces (6 and 7) are made of a thermoplastic material or of a thermoplastic composite material identical to or different from that of the inner (2) and outer (3) layers of the pipe (1, 1'), the material of these endpieces optionally including reinforcing fibers and/or electrically conductive fillers.

13. Ducting according to Claim 12, **characterized in that** each of said endpieces (6, 7) is connected to said pipe (1, 1') by rotation welding or by adhesion, and is in contact with the radially inner (1c) and outer (1d) surfaces of the pipe so as to ensure electrical equipotentiality between these surfaces.

14. Ducting according to Claim 12, **characterized in that** each of said endpieces (6, 7) is formed in a single piece with the pipe (1, 1') by overmoulding and is mounted in contact with the radially outer surface (1d) of the pipe.

15. Aircraft wing containing a fuel pipeline having ductings connected to a fuel tank of the aircraft, **characterized in that** at least one of these ductings is as defined in one of the preceding claims.

16. Method for producing a multilayer pipe (1, 1') of a ducting according to one of Claims 1 to 14, **characterized in that** it substantially comprises the following successive steps:
a) winding by coiling with contiguous turns on a mandrel of at least one inner continuous element, such as a strip, made of a composite thermoplastic material with a thermoplastic matrix for example made of polyamide, and incorporating electrically conductive reinforcing means such as carbon fibers, and then continuously consolidating the or each inner element wound in this way in order to obtain an inner layer (2) of the pipe,
b) forming an intermediate (4) layer of the pipe through winding by coiling with contiguous turns on the inner layer at least one intermediate element, such as a strip made of a thermoplastic material non-reinforced with a thermoplastic matrix, preferably identical to that of said inner continuous element, and then continuously consolidating the or each intermediate element wound in this way, and then
c) winding by coiling with contiguous turns on this intermediate layer at least one outer continuous element, such as a strip, made of a composite thermoplastic material that has a thermoplastic matrix incorporating electrically conductive reinforcing means, such as carbon fibers, and which is preferably similar to that of said inner continuous element, and then continuously consolidating the or each intermediate element wound in this way so as to obtain an outer layer (3) of the pipe.

17. Production method according to Claim 16, **characterized in that** these windings are produced so that the angle each turn of the winding of the inner (2), intermediate (4) and/or outer (3) layer makes with said axis of symmetry (X) of the pipe (1, 1'), is substantially equal to 54°.

18. Production method according to Claim 16 or 17, **characterized in that** it includes a subsequent step of fixing the connecting endpieces (6 and 7) to the respective extremities (1a and 1b) of the pipe (1, 1'), these endpieces being made:
- either separately of a thermoplastic material or thermoplastic composite possibly including metal inserts or made of a metallic material, this fixing being preferably achieved by rotation welding or by adhesion of the endpieces in contact with the radially inner (1c) and outer (1d) surfaces of the pipe, so as to ensure electrical equipotentiality between these surfaces,
- or in one piece with the pipe by overmoulding a thermoplastic material or thermoplastic composite, each endpiece then contacting the radially outer surface (1d) of the pipe.
